# FASCICULE DE BREVET EUROPEEN

(11) **EP 0 860 615 B1**
(45) Date de publication et mention de la délivrance du brevet: **20.11.2002**
(21) Numéro de dépôt: 98400372.3
(22) Date de dépôt: 17.02.1998
(51) Int. Cl.: F16B 5/02

(54) **Pièce en matière plastique à fixation glissante intégrée**
Kunststoffteil mit integrierter Gleitbefestigung
Plastic element with integrated sliding fastening

(30) Priorité: 19.02.1997 FR 9701949
(43) Date de publication de la demande: 26.08.1998
(73) Titulaire: COMPAGNIE PLASTIC OMNIUM, 69007 Lyon (FR)
(72) Inventeur: Chaptal, Patrice, 01100 Bellignat (FR); Barbier, Pascal, 52200 Langres (FR); Alberti, Pascal, 01100 Geovresset (FR); Marcos, William, 01100 Oyonnax (FR)
(74) Mandataire: Leszczynski, André

(56) Documents cités:
- EP-A- 0 346 237

## Description

La présente invention concerne une pièce en matière plastique apte à être fixée de façon glissante à un support. Une telle pièce est connue, par exemple, du document EP-A- 0 346 237.

On sait que les pièces de carrosserie d'un véhicule automobile sont assujetties à la structure du véhicule par des fixations rapportées qui assurent leur maintien en position durant toutes les phases de la fabrication du véhicule subséquentes à leur mise en place et durant toute la durée de vie du véhicule.

On sait également que, parmi les étapes de fabrication du véhicule subséquentes à la mise en place des pièces de carrosserie, figurent l'étape de cataphorèse qui consiste à immerger dans un bain la totalité du véhicule, pièces de carrosserie comprises, puis à passer le véhicule dans un four à une température comprise entre environ 180 et 220°C de manière à traiter la structure du véhicule et toutes les parties métalliques qu'il comporte contre la corrosion, ainsi que l'étape de peinture qui comprend une phase de cuisson à une température comprise entre environ 140 et 170°C.

Ces différentes opérations sont prévues pour des pièces de carrosserie en tôle.

En revanche, les pièces de carrosserie en matière plastique supportent plus difficilement de tels traitements, notamment celui consistant en la cuisson de la peinture.

En effet, au cours de ce chauffage, les pièces en matière plastique se dilatent dans des proportions bien supérieures à celles dans lesquelles la structure du véhicule se dilate, de sorte qu'il apparaît une dilatation différentielle importante entre la structure du véhicule et les pièces de carrosserie qui y sont fixées. De ce fait, les pièces de carrosserie en matière plastique se déforment en se voilant ou en formant des ondulations qui nuisent à l'esthétique du véhicule.

De plus, des dilatations différentielles apparaissent au cours de la vie du véhicule, du fait que les pièces peuvent atteindre des températures voisines de 80°C, ce qui doit aussi être pris en compte dans la manière dont on fixe les pièces de carrosserie sur la structure du véhicule.

Enfin, un autre problème apparaît en raison du retrait que subissent les pièces en matière thermoplastique après une mise en température et dans le temps, phénomène appelé post-retrait, qui se traduit par un déplacement relatif des pièces de carrosserie par rapport à la structure du véhicule, indépendamment des phénomènes de dilatation différentielle.

Pour résoudre ces inconvénients, on utilise des fixations rapportées qui permettent le glissement relatif d'une pièce de carrosserie par rapport à la structure du véhicule. De telles fixations sont désignées "fixations glissantes".

Toutefois, les fixations glissantes connues présentent de nombreux inconvénients, parmi lesquels on peut citer :
- leur prix de revient qui est assez élevé,
- le fait que, lors de la mise en place des pièces de carrosserie sur la structure du véhicule, il est nécessaire de les prépositionner pour pouvoir engager les organes de fixation dans leurs logements.

La présente invention vise à proposer une pièce de carrosserie qui comporte un système de fixation intégré, ce qui lui permet d'éviter les inconvénients rappelés ci-dessus, tout en présentant d'autres avantages qui apparaîtront à la lecture de la description qui va suivre.

La présente invention a pour objet une pièce en matière plastique comportant au moins une paroi mince, et destinée à être fixée de façon glissante à un support par sa paroi mince et comportant, dans cette paroi mince : une ouverture traversante allongée, comportant deux bords longitudinaux sensiblement parallèles au moins sur une partie de leur longueur; une entretoise d'épaisseur supérieure à celle de la paroi mince, apte à coulisser à l'intérieur de l'ouverture entre les deux bords longitudinaux de celle-ci; et un moyen pour assujettir l'entretoise au support tout en maintenant ladite entretoise à l'intérieur de l'ouverture, ladite pièce en matière plastique étant caractérisée par le fait que l'entretoise est initialement attachée à la paroi mince par des liens déformables ou cassables.

Selon l'invention, on entend par paroi mince une partie de la pièce qui présente une dimension très petite par rapport à ses deux autres dimensions.

Dans la définition de l'invention donnée ci-dessus, l'adverbe "initialement" désigne l'intervalle de temps pendant lequel la pièce en matière plastique est fabriquée mais n'a pas encore été utilisée, c'est-à-dire fixée au support.

On comprend que la pièce en matière plastique selon l'invention, qui peut être par exemple une pièce de carrosserie, comporte, dans sa paroi, une ouverture allongée qui forme une sorte de fenêtre, à l'intérieur de laquelle se trouve un organe qui est plus épais que ladite paroi à l'endroit de l'ouverture et qui présente des dimensions telles qu'étant logé dans l'ouverture, il ne peut se déplacer dans l'ouverture que dans la direction longitudinale de celle-ci, ledit organe constituant par ailleurs une entretoise au sens où, lors de la fixation de la pièce de carrosserie, un moyen est par exemple serré sur ledit organe et maintient la paroi de la pièce dans l'épaisseur dudit organe, ce moyen n'étant toutefois pas serré sur la paroi, précisément grâce à l'organe constituant l'entretoise.

De préférence, la surface de l'entretoise offrant un appui pour le moyen serré sur celle-ci est suffisante pour empêcher tout fluage de l'entretoise, y compris lors des montées en température de celle-ci. On choisira cette surface en fonction des conditions souhaitées et du matériau utilisé.

Le choix d'une surface d'appui convenable permet notamment d'éviter le recours à une rondelle anti-déserrage que l'on utilise habituellement pour assurer le maintien du serrage des vis dans le cas où l'entretoise est assujettie au support à l'aide d'une vis.

Dans un mode de réalisation de l'invention, l'entretoise se situe initialement en dehors de l'ouverture, mais en regard de cette dernière, de manière à prendre place dans ladite ouverture lors de la fixation de la pièce sur le support.

Ce mode de réalisation facilite l'obtention par moulage de la pièce en matière plastique et de l'entretoise, car le moule peut ainsi délimiter, d'une part, l'empreinte des bords de l'ouverture dans l'épaisseur de la paroi mince de la pièce et, d'autre part, l'empreinte de l'entretoise au voisinage de l'ouverture.

Il serait en effet très délicat, voire impossible, de délimiter l'empreinte de l'entretoise à l'intérieur de l'empreinte des bords de l'ouverture, car cela nécessiterait que le moule comporte entre ces deux empreintes une paroi extrêmement mince, dont l'épaisseur correspondrait au jeu nécessaire entre l'entretoise et l'ouverture, étant donné que, dans un plan perpendiculaire à la direction longitudinale de l'ouverture, les dimensions de l'entretoise sont très légèrement inférieures à celles de l'ouverture, puisqu'il n'existe qu'un faible jeu entre l'entretoise et les bords longitudinaux de l'ouverture.

Dans un premier mode de réalisation de l'invention, les liens qui relient l'entretoise à la paroi mince sont constitués par des bras flexibles reliant l'entretoise à chacune des extrémités les plus éloignées l'une de l'autre de l'ouverture.

De tels bras sont de préférence issus du moulage de la pièce en matière plastique et de l'entretoise.

Ils sont avantageusement agencés de manière à maintenir l'entretoise en une position prédéterminée à l'intérieur de l'ouverture, lorsque la pièce en matière plastique n'est pas fixée au support, ce qui assure le prépositionnement de l'entretoise.

Cette position prédéterminée est telle que l'entretoise peut se déplacer dans une première direction dans l'ouverture pour compenser le post-retrait de la matière thermoplastique et dans une seconde direction, opposée à la première, pour compenser les dilatations différentielles entre la pièce en matière thermoplastique et la structure du véhicule.

Les différences de dilatation étant prépondérantes, la course offerte à l'entretoise dans l'ouverture dans la seconde direction est supérieure à celle offerte dans la première direction.

Dans un deuxième mode de réalisation de l'invention, l'entretoise est située initialement en-dehors de l'ouverture, mais se trouve en regard de celle-ci, et les liens sont constitués par des zones de faible section reliant l'entretoise aux bords longitudinaux de l'ouverture, de sorte que, lors de la fixation de la pièce en matière plastique sur le support, lesdites zones se cassent par cisaillement.

Ainsi, l'entretoise est prépositionnée au moment de sa mise en place sur le support, mais l'assujettissement de l'entretoise au support provoque la pénétration de l'entretoise dans l'ouverture, ce qui soumet les zones de faible section à un cisaillement qui les rompt. L'entretoise est alors totalement disjointe de la paroi.

Dans un troisième mode de réalisation préféré de l'invention, le moyen pour assujettir l'entretoise au support, tout en maintenant ladite entretoise à l'intérieur de l'ouverture, est constitué par un cache sensiblement plan apte à recouvrir la totalité de l'ouverture et à être serré contre l'entretoise par un organe de serrage ancré dans le support, par exemple une vis traversant le cache et l'entretoise et vissée dans le support ou une tige filetée intégrée au cache et traversant l'entretoise et le support un écrou étant vissé sur cette tige sur l'autre face du support.

Un tel cache peut être par exemple réalisé en alliage de polyamides.

Dans le but de mieux faire comprendre l'invention, on va en décrire maintenant des modes de réalisation, en référence au dessin annexé dans lequel :
- la figure 1 est une vue en perspective d'une aile de véhicule selon un premier mode de réalisation,
- la figure 2 est une vue en coupe selon II-II de la figure 1,
- la figure 3 est une vue de dessus à plus grande échelle de l'ouverture et de l'entretoise de l'aile de la figure 1,
- la figure 4 est une section selon IV-IV de la figure 3,
- la figure 5 est une vue analogue à la figure 3 concernant un deuxième mode de réalisation,
- la figure 6 est une vue en coupe selon VI-VI de la figure 5,
- la figure 7 est une vue de détail de la zone VII de la figure 6,
- la figure 8 est une vue analogue à la figure 7 après rupture des zones de faible section, et
- la figure 9 est une vue analogue à la figure 1 représentant notamment une variante de cache.

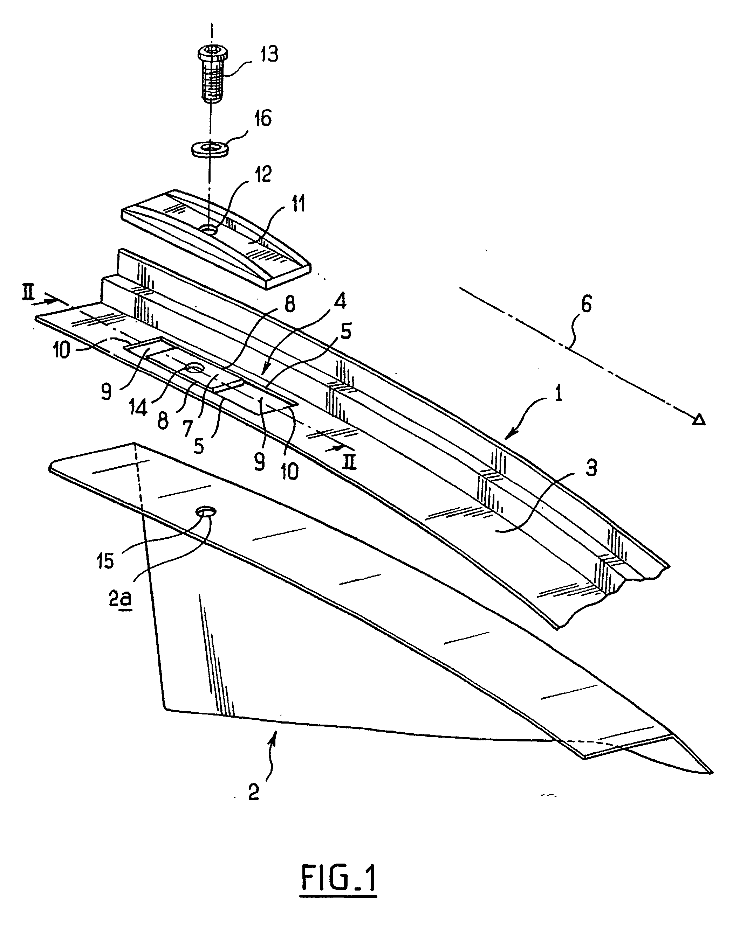

Sur la figure 1, on a représenté la partie supérieure 1 d'une aile avant gauche de véhicule automobile et la partie supérieure d'une pièce de structure 2 de ce véhicule, laquelle sert de support pour l'aile 3.

L'aile comporte une paroi mince 3 dans laquelle est ménagée une ouverture 4 traversante de forme rectangulaire, dont les grands côtés 5, ou bords longitudinaux, sont parallèles à la direction longitudinale 6 du véhicule.

Une pièce parallélépipédique 7 constituant une entretoise au sens de l'invention est logée à l'intérieur de l'ouverture 4. Elle présente, dans le plan de la paroi 3, une section rectangulaire dont la largeur est légèrement inférieure à celle de l'ouverture 4 et dont la longueur est très inférieure à celle de l'ouverture 4.

Ainsi, il existe un faible jeu 8 entre l'entretoise 7 et les bords longitudinaux 5 et un espace important 9 entre l'entretoise et chacun des bords d'extrémités les plus éloignés 10 de l'ouverture.

Les espaces importants 9 autorisent le déplacement relatif de l'entretoise 7 dans l'ouverture 4 sur une course environ égale à la somme des longueurs desdits espaces, cette course étant déterminée pour correspondre au différentiel de dilatation prévu entre l'aile et le support dans une direction et au post-retrait dans l'autre direction, tandis que les faibles jeux 8 empêchent toute rotation de l'entretoise par rapport à l'ouverture.

On comprend que lorsque l'entretoise est immobilisée, les mouvements relatifs de l'entretoise par rapport à l'ouverture proviennent d'un déplacement de l'aile 1 par rapport à la pièce de structure 2, c'est-à-dire de l'ouverture par rapport à l'entretoise.

Un cache 11 est prévu pour venir recouvrir la totalité de l'ouverture 4. Il comporte un orifice 12 permettant le passage d'une vis de serrage 13 qui traverse également l'entretoise à travers un passage 14 et vient se visser dans un écrou 2a soudé à la pièce de structure en dessous d'un orifice 15. Une rondelle 16 est prévue entre la tête de la vis 13 et le cache 11 pour protéger ce dernier lors du serrage.

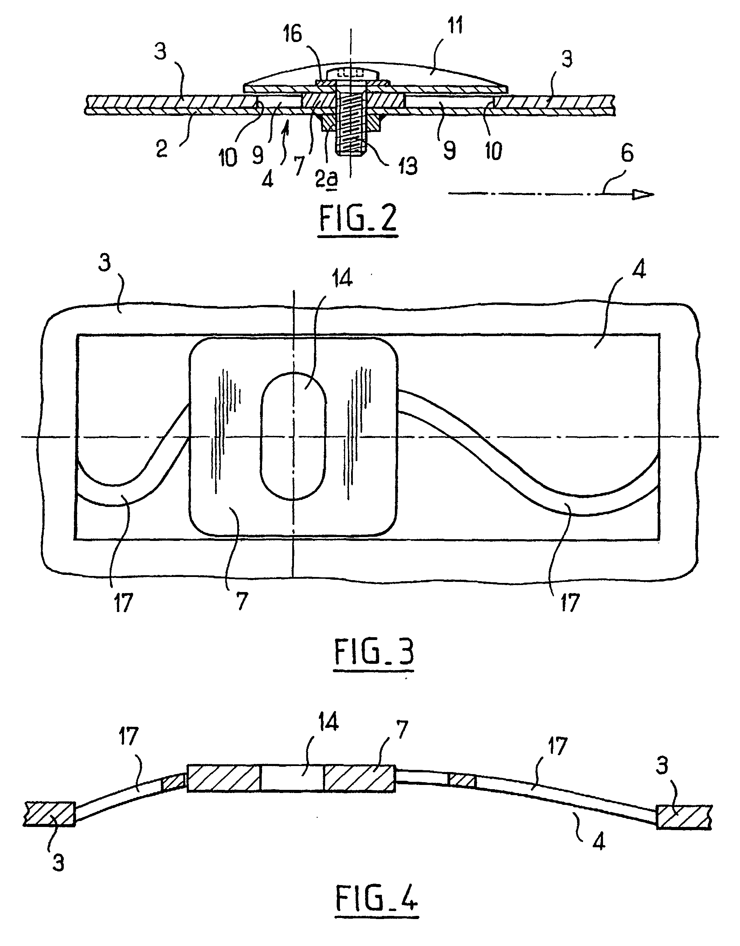

La fixation à l'état serré est représentée en coupe sur la figure 2 où l'on voit que l'entretoise 7 est plus épaisse que la paroi 3, ce qui maintient le cache 11 au dessus de la paroi 3. Ainsi, ladite paroi est libre de coulisser autour de l'entretoise 7 pour permettre un déplacement relatif de l'aile par rapport à la pièce de structure.

Comme on le voit mieux sur la figure 3, l'entretoise 7 est reliée aux bords d'extrémité 10 de l'ouverture par des bras flexibles 17 de forme sinusoïdale, qui sont issus du moulage simultané de l'aile 1 et de l'entretoise 7.

La forme des bras donnée ici n'est fournie qu'à titre d'exemple, toute autre forme autorisant le déplacement de l'entretoise dans l'ouverture conviendrait également.

Ces bras flexibles assurent le pré-positionnement de l'entretoise en une position prédéterminée dans l'ouverture tout en permettant, par déformation élastique, le déplacement relatif de l'entretoise par rapport à l'ouverture.

Comme cela a déjà été expliqué, la position prédéterminée est telle que l'entretoise peut se déplacer dans une première direction sur une course relativement petite, pour compenser le post-retrait de l'aile, et dans une seconde direction, opposée à la première, sur une course plus importante, pour compenser le différentiel de dilatation.

L'entretoise 7, qui est issue de moulage avec l'aile 1, est initialement positionnée en dehors et en regard de l'ouverture, comme on le voit à la figure 4, pour des raisons de configuration de moule, ainsi que cela a déjà été expliqué.

Le serrage de la vis 13 provoque la pénétration de l'entretoise dans l'ouverture, comme représenté à la figure 2.

Sur la figure 3, on voit également que le passage 14 est oblong, ce qui permet un réglage de l'aile dans la direction transversale du véhicule.

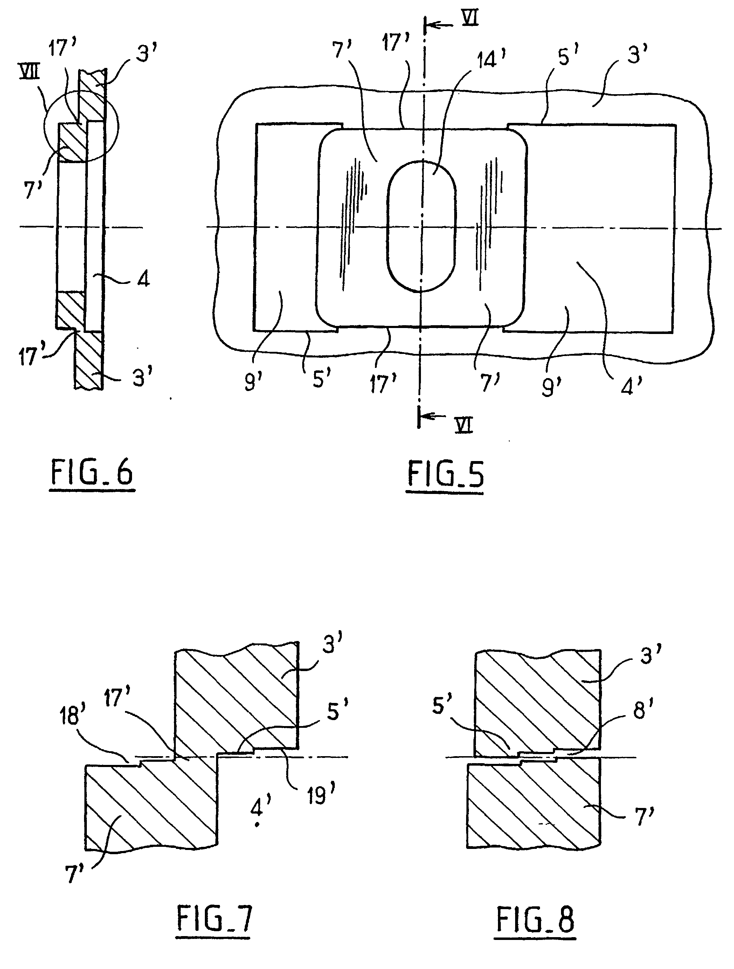

Sur les figures 5 à 8, on a représenté un deuxième mode de réalisation dans lequel l'entretoise 7', qui est sensiblement identique à l'entretoise 7 du premier mode de réalisation, est initialement réunie aux bords longitudinaux 5' par des zones de faible section 17'.

L'entretoise 7' est initialement positionnée en dehors de l'ouverture 4', comme dans le précédent mode de réalisation.

Lors du serrage de la vis (non représentée), l'entretoise pénètre dans l'ouverture 4', ce qui provoque le cisaillement et donc la rupture des zones de faible section 17'.

Sur les vues de détail des figures 7 et 8, on voit que l'entretoise 7' comporte des dégagements 18' qui, dans le plan de coupe VI-VI, réduisent sa section à mesure que l'on s'éloigne de la paroi 3'.

De même, la section de l'ouverture 4', dans le même plan de coupe VI-VI, augmente à mesure que l'on s'éloigne de l'entretoise 7', grâce à des dégagements 19'.

Ainsi, une fois les zones de faible section 17' cisaillées, il existe, entre l'entretoise 7' et les bords longitudinaux 5', un jeu 8' suffisant pour permettre le coulissement relatif de l'entretoise dans l'ouverture.

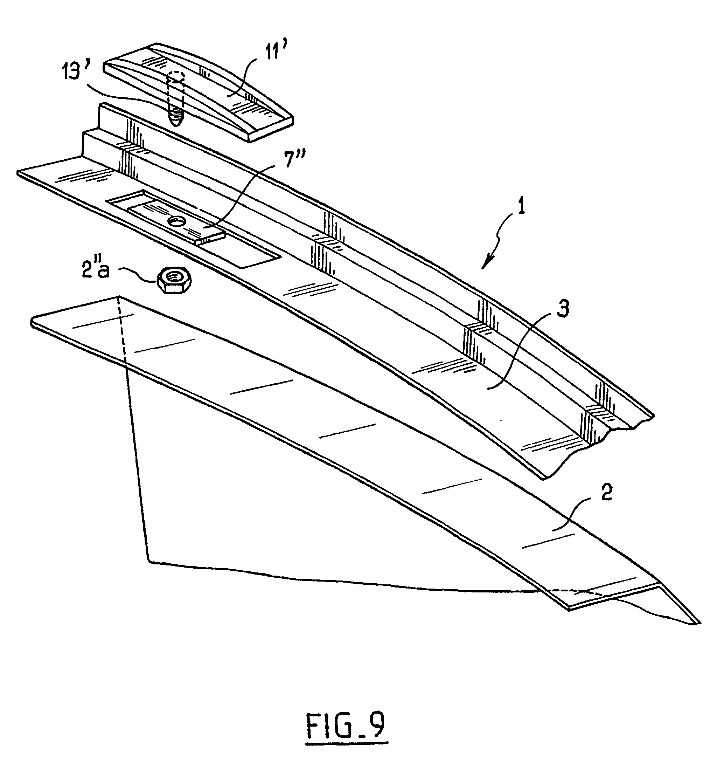

Sur la figure 9, on a représenté la même partie supérieure 1 d'aile avant gauche 3, et la même partie supérieure d'une pièce de structure 2 formant support pour l'aile.

L'entretoise 7" est du type de celle des figures 1 à 4 ou du type de celle des figures 5 à 8.

Le cache 11' comporte une tige filetée intégrée 13' qui est apte à traverser l'entretoise 7" et le support 2 pour recevoir un écrou 2"a qui n'est pas soudé au support, de manière à pouvoir être vissé sur la tige filetée qui est immobilisée en rotation par le cache, au moins à la fin du vissage, lorsque ledit cache commence à comprimer l'entretoise.

La tige filetée 13' peut être par exemple intégrée en tant qu'insert au cache 11' lors du moulage de ce dernier.

L'écrou 2a, même lorsqu'il est destiné à une vis 13 libre par rapport au cache 11, peut être libre par rapport au support et non soudé sur celui-ci.

## Revendications

1. Pièce en matière plastique (1), comportant au moins une paroi mince (3,3'), destinée à être fixée de façon glissante à un support (2) par sa paroi mince (3,3') et comportant dans cette paroi mince 3,3') une ouverture (4,4') traversante allongée, comportant deux bords longitudinaux (5,5') parallèles au moins sur une partie de leur longueur; une entretoise (7,7') d'épaisseur supérieure à celle de la paroi mince (3,3'), apte à coulisser à l'intérieur de l'ouverture (4,4') entre les deux bords longitudinaux (5,5') de celle-ci; et un moyen (11) pour assujettir l'entretoise (7,7') au support (2) tout en maintenant ladite entretoise (7,7') à l'intérieur de l'ouverture (4,4'), ladite pièce en matière plastique étant **caractérisée par le fait que** l'entretoise (7,7') est initialement attachée à la paroi mince (3,3') par des liens (17,17') déformables ou cassables.

2. Pièce en matière plastique selon la revendication 1, **caractérisée par le fait que** l'entretoise (7,7') se situe initialement en dehors de l'ouverture (4,4'), mais en regard de cette dernière, de manière à prendre place dans ladite ouverture (4,4') lors de la fixation de la pièce sur le support (2).

3. Pièce en matière plastique selon l'une quelconque des revendications 1 et 2, **caractérisée par le fait que** les liens sont constitués par des zones de faible section (17') reliant l'entretoise (7') aux bords longitudinaux (5') de l'ouverture (4'), de sorte que, lors de la fixation de la pièce en matière plastique sur le support (2), lesdites zones (17') se cassent par cisaillement.

4. Pièce en matière plastique selon l'une quelconque des revendications 1 et 2, **caractérisée par le fait que** les liens qui relient l'entretoise (7) à la paroi mince (3) sont constitués par des bras flexibles (17) reliant l'entretoise à chacune des extrémités (10) les plus éloignées l'une de l'autre de l'ouverture (4).

5. Pièce en matière plastique selon la revendication 4, **caractérisée par le fait que** les bras (17) sont agencés de manière à maintenir l'entretoise (7) dans une position prédéterminée à l'intérieur de l'ouverture (4), lorsque la pièce en matière plastique n'est pas fixée au support (2), cette position prédéterminée étant telle qu'elle permet de compenser le post-retrait de la pièce dans une direction et les dilatations différentielles entre la pièce et le support (2) dans une direction opposée.

6. Pièce en matière plastique selon l'une quelconque des revendications 1 à 5, **caractérisée par le fait que** l'entretoise (7,7') offre une surface d'appui pour le moyen (11) serré sur celle-ci, cette surface d'appui étant suffisante pour empêcher tout fluage de l'entretoise (7,7'), y compris lors des montées en température de celle-ci.

7. Pièce en matière plastique selon l'une quelconque des revendications 1 à 6, **caractérisée par le fait que** le moyen pour assujettir l'entretoise (7) au support (2), tout en maintenant ladite entretoise (7) à l'intérieur de l'ouverture (4), est constitué par un cache (11) sensiblement plan apte à recouvrir la totalité de l'ouverture (4) et à être serré contre l'entretoise (7) par un organe de serrage (13) ancré dans le support (2).

8. Pièce en matière plastique selon la revendication 7, **caractérisée par le fait que** l'organe de serrage est une tige filetée (13') intégrée au cache (11').

9. Pièce de carrosserie d'un véhicule automobile, **caractérisée par le fait qu'**elle est constituée par une pièce en matière plastique selon l'une quelconque des revendications 1 à 8.

## Patentansprüche

1. Kunststoffteil (1), das aufweist mindestens eine dünne Wand (3, 3'), das bestimmt ist, gleitverschieblich an einem Tragteil (2) mittels seiner dünnen Wand (3, 3') befestigt zu werden und das in dieser dünnen Wand (3, 3') eine durchgehende, längliche Öffnung (4, 4') hat, welche zwei Längsränder (5, 5') aufweist, die zumindest über einen Teilbereich ihrer Länge parallel verlaufen; ein Zwischenstück (7,7') mit einer grösseren Dicke als diejenige der dünnen Wand (3, 3'), das im Innenbereich der Öffnung (4, 4') zwischen deren Längsrändern (5, 5') gleiten kann; und ein Mittel (11) für die Verbindung des Zwischenstückes (7, 7') mit dem Tragteil (2), wobei das Zwischenstück (7, 7') im Innenbereich der Öffnung (4, 4') gehalten wird, dieses Kunststoffteil ist dadurch charakterisiert, dass das Zwischenstück (7, 7') anfänglich mit der dünnen Wand (3, 3') durch deformierbare oder zerstörbare Verbindungsmittel (17, 17') verbunden ist.

2. Kunststoffteil nach Anspruch 1, **dadurch gekennzeichnet, dass** das Zwischenstück (7, 7') sich anfänglich ausserhalb der Öffnung (4, 4'), aber im Bezug auf diese so befindet, dass es sich während der Montage des Kunststoffteils an dem Tragteil (2) in die Öffnung (4, 4') einfindet.

3. Kunststoffteil nach einem beliebigen der Ansprüche 1 bis 2, **dadurch gekennzeichnet, dass** die Verbindungsmittel gebildet sind durch Zonen geringen Querschnitts (17'), die das Zwischenstück (7') mit den Längsrändern (5') der Öffnung (4') so verbinden, dass während der Montage des Kunststoffteils an dem Tragteil (2) die Zonen (17') durch Scherung brechen.

4. Kunststoffteil nach einem beliebigen der Ansprüche 1 und 2, **dadurch gekennzeichnet, dass** die Verbindungsmittel, die das Zwischenstück (7) mit der dünnen Wand (3) verbinden, gebildet sind durch flexible Arme (17), die das Zwischenstück mit jedem der am weitesten voneinander entfernten Endbereiche (10) der Öffnung (4) verbinden.

5. Kunststoffteil nach Anspruch 4, **dadurch gekennzeichnet, dass** die Arme (17) so angelegt sind, dass sie das Zwischenstück (7) in einer vorbestimmten Position im Inneren der Öffnung (4) halten, während das Kunststoffteil nicht mit dem Tragteil (2) verbunden ist, diese vorbestimmte Position ist so, dass sie eine spätere Verschiebung des Kunststoffteils in einer Richtung und differentielle Ausdehnungen zwischen dem Kunststoffteil und dem Tragteil (2) in einer Gegenrichtung kompensiert.

6. Kunststoffteil nach einem beliebigen der Ansprüche 1 und 5, **dadurch gekennzeichnet, dass** das Zwischenstück (7, 7') eine Anschlagfläche für ein auf ihm befestigtes Mittel (11) ist, diese Anschlagfläche ist ausreichend, um jegliches Fliessen des Zwischenstücks (7, 7') zu verhindern, einschliesslich eines Fliessen während Temperaturerhöhungen dieses Teils.

7. Kunststoffteil nach einem beliebigen der Ansprüche 1 und 6, **dadurch gekennzeichnet, dass** das Mittel zur Befestigung des Zwischenstückes (7) am Tragteil (2) unter Beibehaltung des Zwischenstückes (7) im Innenbereich der Öffnung (4) gebildet ist von einem Abdeckteil (11), das im wesentlichen plan die gesamte Öffnung (4) überdecken kann und mittels eines Spannorgans (13), das im Tragteil (2) gehalten ist, gegen das Zwischenstück (7) gespannt werden kann.

8. Kunststoffteil nach Anspruch 7, **dadurch gekennzeichnet, dass** das Spannorgan ein Gewindestift (13') ist, der in das Abdeckstück (11') integriert ist.

9. Karosserieteil eines Automobils, **dadurch gekennzeichnet, dass** es gebildet ist von einem Kunststoffteil nach einem beliebigen der Ansprüche 1 bis 8.

## Claims

1. Plastic element (1), comprising at least one thin wall (3, 3'), intended to be fastened in a sliding manner to a support (2) by its thin wall (3, 3') and comprising in this thin wall (3, 3') an elongated through-opening (4, 4'), comprising two longitudinal edges (5, 5') which are parallel over at least part of their length; a spacer (7, 7') with a thickness greater than that of the thin wall (3, 3') capable of sliding inside the opening (4, 4') between the two longitudinal edges (5, 5') thereof; and a means (11) to secure the spacer (7, 7') to the support (2) while keeping the said spacer (7, 7') inside the opening (4, 4'), the said plastic element being **characterized in that** the spacer (7, 7') is initially attached to the thin wall (3, 3') by deformable or breakable connections (17, 17').

2. Plastic element according to Claim 1, **characterized in that** the spacer (7, 7') is initially located outside the opening (4, 4'), but facing the latter, so as to be placed in the said opening (4, 4') when fastening the element to the support (2).

3. Plastic element according to either of Claims 1 and 2, **characterized in that** the connections consist of regions of small cross section (17') connecting the spacer (7') to the longitudinal edges (5') of the opening (4'), such that, when fastening the plastic element to the support (2), the said regions (17') break by shearing.

4. Plastic element according to either of Claims 1 and 2, **characterized in that** the connections which connect the spacer (7) to the thin wall (3) consist of flexible arms (17) connecting the spacer to each of the ends (10) of the opening (4) furthest away from each other.

5. Plastic element according to Claim 4, **characterized in that** the arms (17) are arranged so as to keep the spacer (7) in a predetermined position inside the opening (4), when the plastic element is not fastened to the support (2), this predetermined position being such that it makes it possible to compensate for the post-shrinkage of the element in one direction and for the differential expansion between the element and the support (2) in an opposite direction.

6. Plastic element according to any one of Claims 1 to 5, **characterized in that** the spacer (7, 7') provides a support surface for the means (11) clamped thereto, this support surface being sufficient to prevent any plastic flow of the spacer (7, 7'), including during increases in temperature thereof.

7. Plastic element according to any one of Claims 1 to 6, **characterized in that** the means for securing the spacer (7) to the support (2), while keeping the said spacer (7) inside the opening (4), consists of a substantially flat cover (11) capable of covering the entire opening (4) and of being clamped against the spacer (7) by a clamping member (13) anchored in the support (2).

8. Plastic element according to Claim 7, **characterized in that** the clamping member is a threaded rod (13') integrated into the cover (11').

9. Bodywork element for a motor vehicle, **characterized in that** it consists of a plastic element according to any one of Claims 1 to 8.
